# EUROPEAN PATENT APPLICATION

(11) **EP 1 369 736 A1**
(43) Date of publication of application: **10.12.2003**
(21) Application number: 03011035.7
(22) Date of filing: 19.05.2003
(51) Int. Cl.: G02C 5/00, G02C 5/12

(54) **Nosepiece for eyeglasses**

(30) Priority: 04.06.2002 IT PD20020149
(71) Applicant: SILCON PLASTIC S.r.l., 32012 Forno di Zoldo (Belluno) (IT)
(72) Inventor: Battistin, Pietro, 32012 Forno Di Zoldo (Belluno) (IT); Costantin, Arcangelo, 32012 Forno Di Zoldo (Belluno) (IT)
(74) Representative: Modiano, Guido, Dr.-Ing.

(57) **Abstract**

A nosepiece for resting eyeglasses on the region of the root of the nose of a wearer of eyeglasses, the nosepiece being made of Surlyn (a registered trademark of DuPont).

## Description

The present invention relates to a nosepiece for resting eyeglasses on the region of the root of the nose of a wearer of eyeglasses.

Nosepieces for resting eyeglasses on the region of the root of the nose of a wearer of eyeglasses, made of uniform materials, with a finished and substantially smooth surface, resistant to aging and abrasions and associable with the materials normally used for frames are already known.

Known nosepieces have several drawbacks, the main ones being:
-- the load-bearing surface is small;
-- more intense perspiration occurs under the nosepiece, and this causes many negative consequences, such as loss of sheen and optical clarity of said nosepiece;
-- many materials of which nosepieces are made are subject to yellowing over time;
-- many materials of which nosepieces are made can become receptacles for germs or provide nutrition for germs;
-- the materials of which the nosepieces are made must allow their mass-production;
-- the material must be workable with relatively uncomplicated devices;
-- many materials have a short reaction time and react inside the molding injector if the operation is not swift enough, and pauses are required at least every time new material has to be added;
-- the material must be a good heat insulator, since otherwise a cold spot forms on the nose, which is very sensitive.

The aim of the present invention is to provide a nosepiece for resting eyeglasses on the region of the root of the nose of a wearer of eyeglasses that eliminates the above-mentioned problems of known solutions.

Within this aim, an object of the invention is to provide a nosepiece for resting eyeglasses on the region of the root of the nose of a wearer of eyeglasses that keeps the skin drier in the contact region, has the optical clarity required for the lenses of eyeglasses, has excellent mechanical strength characteristics, is compatible for contact with all possible types of human skin, has good stability at high and low temperature, and can be manufactured simply and at low cost.

This aim and this and other objects that will become better apparent hereinafter are achieved by a nosepiece made of Surlyn (a registered trademark of DuPont).

According to DuPont data sheets, this is a tough and highly versatile ionomeric resin with good bonding to metal, which is used in many fields for this reason.

The resin is a copolymer of ethylene and methacrylic acid, ionically cross-linked with metallic cations.

The material is a thermoplastic polymer with extremely high tenacity and impact strength.

Components made of this material retain their aesthetic characteristics for a long time and provide excellent performance even when they are subjected to repeated impacts, or when they are at low temperature or make contact with aggressive chemicals and perspiration, and are also resistant to UV rays.

Products with high tenacity and excellent thermal bonding characteristics that compete with glass in terms of optical clarity and chemical inertia and exceed glass in terms of lightness and strength can be provided by using this material by injection-molding.

Products made of this material can be colored, satin finished, metallized and decorated easily.

Moreover, the material can be injection-molded, blow-molded, extruded, expanded, vacuum-formed and thermoformed.

Technical tests and experimental laboratory tests have shown that Surlyn, particularly the one referenced as PC100, is particularly suitable for producing nosepieces for resting eyeglasses on the region of the root of the nose of users, solving the problems noted above.

In particular, nosepieces made of this material:
-- keep the skin drier in the contact region;
-- have the optical clarity required for the lenses of eyeglasses;
-- have excellent mechanical strength characteristics;
-- are compatible with contact on all possible type of human skin;
-- have good stability at high and low temperatures;
-- are obtained simply and at low cost.

In practice, it has been found that the intended aim and objects of the present invention have been achieved.

The invention thus conceived is susceptible of numerous modifications and variations, all of which are within the scope of the appended claims, which can be applied to endpieces, temples, decorations, sweat bars, eyewires, nose bridges and complete fronts.

Accordingly, the nosepieces can have any appropriate shape and thickness so as to be suitable for resting the eyeglasses on the nose.

The disclosures in Italian Patent Application No. PD2002A000149 from which this application claims priority are incorporated herein by reference.

## Claims

1. A nosepiece for resting eyeglasses on the region of the root of the nose of a wearer of eyeglasses, **characterized in that** it is made of Surlyn (a registered trademark of DuPont).

2. The nosepiece according to claim 1, **characterized in that** it is made of Surlyn designated by the code PC100.

3. Use of Surlyn (a registered trademark of DuPont) to form nosepieces for resting eyeglasses on the region of the root of the nose of a wearer of eyeglasses.

4. The use of Surlyn according to claim 3, **characterized in that** said Surlyn is of the type designated by the code PC100.

5. Use of Surlyn (a registered trademark of DuPont) to form endpieces, temples, decorations, sweat bars, eyewires, nose bridges and complete fronts of eyeglasses.

6. The use of Surlyn according to claim 5, **characterized in that** said Surlyn is of the type designated by the code PC100.
